Europäisches Patentamt

European Patent Office

Office européen des brevets

(11) Numéro de publication : **0 493 189 B1**

(19)

(12) # FASCICULE DE BREVET EUROPEEN

(45) Date de publication du fascicule du brevet :
**21.06.95 Bulletin 95/25**

(51) Int. Cl.$^6$ : **G01S 13/28**

(21) Numéro de dépôt : **91403421.0**

(22) Date de dépôt : **17.12.91**

(54) Traitement d'un signal impulsionnel codé numériquement.

(30) Priorité : **27.12.90 FR 9016325**

(43) Date de publication de la demande :
**01.07.92 Bulletin 92/27**

(45) Mention de la délivrance du brevet :
**21.06.95 Bulletin 95/25**

(84) Etats contractants désignés :
**BE DE FR GB IT SE**

(56) Documents cités :
**EP-A- 0 336 272
FR-A- 2 332 541
US-A- 4 259 650
IEEE 1990 INTERNATIONAL RADAR CONFE-
RENCE 10 mai 1990, ARLINGTON VA , USA
pages249 - 252; J.M. BADEN ET AL.: 'Optimal
peak sidelobe filters for biphase pulse
compression'
COLLOQUE INTERNATIONAL SUR LE RADAR
8 décembre 1978, PARIS , FRANCE pages 60
-67; G. GALATI ET AL.: 'Synthèse et évaluation
des modulations du signal émis pour radars
de poursuite'**

(73) Titulaire : **THOMSON-CSF
173, Boulevard Haussmann
F-75008 Paris (FR)**

(72) Inventeur : **Bouvet, Jacky
THOMSON-CSF,
SCPI,
Cédex 67
F-92045 Paris la Défense (FR)**
Inventeur : **Chapelet, Anne
THOMSON-CSF,
SCPI,
Cédex 67
F-92045 Paris la Défense (FR)**

(74) Mandataire : **Benoit, Monique et al
THOMSON-CSF
SCPI
B.P. 329
50, rue Jean-Pierre Timbaud
F-92402 Courbevoie Cédex (FR)**

## Description

L'invention se situe dans le domaine des radars à compression d'impulsion numérique et plus particulièrement dans le domaine des radars de courte portée.

Elle peut cependant être généralisée et employée dans les radars à compression d'impulsion analogique et dans les récepteurs de télécommunication recevant des signaux de faible niveau par rapport aux bruits.

On sait que les radars de courte portée émettent une série d'impulsions de durée $N\tau$. Dans cette expression N désigne un nombre entier et $\tau$ un moment élémentaire de l'impulsion. Chacun des moments élémentaires de l'impulsion est modulé par une variation d'un paramètre de l'émission. Ce paramètre peut être par exemple la phase ou la fréquence. Ainsi par exemple chacun des N moments d'une impulsion de durée $N\tau$ peut être affecté ou non d'un déphasage ¶. Par convention on prendra la phase 0 (coefficient 1) pour le code binaire 1 et la phase ¶ (coefficient -1) pour le nombre binaire 0.

Les signaux reçus qui comprennent du bruit et l'écho en retour d'une cible éventuelle sont comparés à l'onde émise par passage dans un corrélateur.

La corrélation de deux fonctions est la mesure de la ressemblance qui existe entre elles : c'est essentiellement un procédé de comparaison.

En numérique, les signaux sont représentés par des suites de nombres qui sont des échantillons successifs d'une forme d'onde continue.

La fonction de corrélation de f(k) et g(k), les deux suites numériques obtenues par l'échantillonnage de deux fonctions continues f(t) et g(t), s'exprime mathématiquement par la relation :

$$S(k) = \int_{i=-\infty}^{+\infty} f(i) \cdot g(i+k)$$

avec i = indice de l'échantillon

et k = indice du décalage

Lorsque f et g sont des fonctions différentes, on parle d'intercorrélation.

Lorsque f et g sont des fonctions identiques, on parle d'autocorrélation.

La fonction d'autocorrélation S(k) d'un code de N moments représenté par la suite $C_i$ (i allant de 0 à N-1) est la mesure de la ressemblance existant entre le code et lui même décalé d'un nombre k de moments.

$$S(k) = \sum_{i=0}^{N-1} C_i \cdot C_{(i+k)}$$

Le résultat de l'autocorrélation d'un code d'une durée de N moments est une suite de nombres qui représente l'amplitude du signal en fonction des décalages successifs qui lui sont appliqués, ces décalages pouvant être gradués en temps ou en distance puisque, en radar, D = C.t/2(10m« = » 66,66ns).

La fonction d'autocorrélation est symétrique :

$$S(k) = S(-k).$$

Elle donne un pic principal et des lobes secondaires.

Ainsi entre le code à 5 moments

    11101

et ce même code décalé de 0

    11101

Il y a 5 ressemblances, d'où S(0)=5

Pour calculer S(1)

    11101

Code décalé de 1

    11101

Il y a 2 ressemblances et 2 différences, d'où S(1)=0 Pour calculer S(2)

    11101

Code décalé de 2

11101

Il y a 2 ressemblances et 1 différence, d'où S(2)=1

De la même manière, on trouve S(3)=0,S(4)=1.

Le nombre de ressemblances d'un code à N moments par rapport à lui-même décalé dans le temps est maximum pour un décalage nul et est égal à N.

$$S(0) = N$$

S(o) est le pic principal, de largeur égale à un décalage. Il donne la distance de la cible.

Pour les autres décalages, k allant de 1 à N-1, l'autocorrélation donne un résultat plus faible, pouvant être nul ; ce résultat dépend uniquement du code choisi. Ces résultats sont les lobes secondaires ; ils se trouvent de chaque côté du pic principal et sont symétriques, S(k) étant égal à S(-k).

Si un lobe secondaire d'un code à N moments a la valeur m, son affaiblissement en décibels par rapport au lobe principal vaut :

$$lobe\ i\ =\ 20.log\ m/N.$$

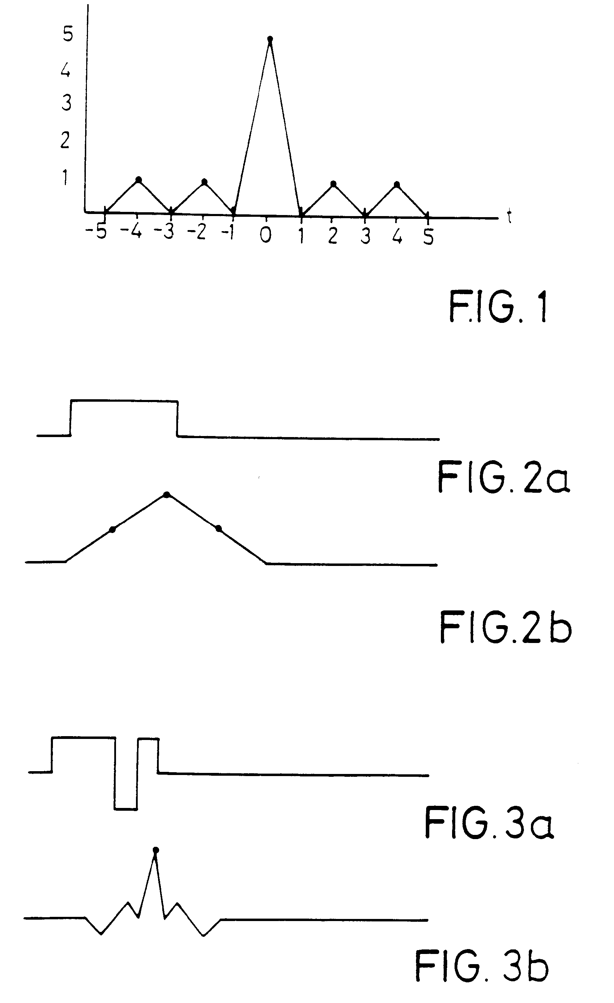

Si l'on reprend l'exemple du code à 5 moments 11101, la représentation dans le temps de sa fonction d'autocorrélation est représentée figure 1, pour k variant de -5 à +5.

Cette fonction fait apparaître un lobe principal pour k=0 et 4 lobes secondaires de valeur 1.

Le niveau relatif des lobes secondaires est : 20 log(1/5)=-14dB.

Nous venons de voir un exemple comportant un code biphasé.

Les codes biphasés ne sont qu'un cas particulier de codes polyphasés où les coefficients sont des nombres complexes (racines n ièmes de l'unité).

codes biphasés : 1 -1

codes quadriphasés : 1 j - 1 -j

Il existe une autre manière de définir la corrélation, en utilisant le plan des complexes.

Le code de phase de longueur N moments utilisé à l'émission peut être représenté dans le plan complexe sous forme d'un polynôme C(z), de degré N-1, défini conventionnellement sur la variable $z^{-1}$ ; cette variable représente un décalage temporel unité où le rang de l'échantillon, et les phases du code définissent les coefficients (+1 ou -1 dans le cas d'un code biphasé).

Le code biphasé à 5 moments 11101 peut se représenter sous la forme d'un polynôme de degré 4 :

$$C(z) = 1 + z^{-1} + z^{-2} - z^{-3} + z^{-4}$$

Le code de référence CR(z) adapté au code C(z) correspond au code complexe conjugué de C(z), retourné temporellement. En effet, lorsque l'on fait l'autocorrélation d'un code C(z) par sa réplique CR(z) dans un corrélateur numérique, cette réplique doit être le conjugué du code initial retourné dans le temps :

pour

$$C(z) = 1 + z^{-1} + z^{-2} - z^{-3} + z^{-4}$$

Le code 11101 doit voir d'abord 1 (étage 1 du corrélateur numérique), puis -1 (étage 2) et enfin 3 fois 1 (étages 3, 4, 5) :

d'ou

$$CR(z) = 1 - z^{-1} + z^{-2} + z^{-3} + z^{-4}$$

Cette opération, que l'on peut expliquer physiquement, équivaut à transformer z en 1:z et à rajouter un retard. Dans le cas des codes polyphasés, il faut de plus prendre le coefficient conjugué :

$$CR(z) = C^*(1/z).z^{-(n-1)}$$

soit un code : 11j-j-1

Il peut s'écrire ainsi :

$$C(z)\ =\ 1 + z^{-1} + jz^{-2} - jz^{-3} - z^{-4}$$

Le code adapté est : $CR(z)=-1+jz^{-1}-jz^{-2}+z^{-3}+z^{-4}$

dans le corrélateur les coefficients doivent être rangés ainsi :

| étage | 1 | 2 | 3 | 4 | 5 |
|---|---|---|---|---|---|
| coefficient | -1 | j | -j | 1 | 1 |

La fonction de corrélation S(z) s'exprime ainsi :

$$S(z) = C(z).CR(z) = C(z).C^*(1/z).z^{-(n-1)}$$

Dans l'exemple du code 11101 :

$$S(z) = C(z).CR(z) = (1 + z^{-1} + z^{-2} - z^{-3} + z^{-4})(1 - z^{-1} + z^{-2} + z^{-3} + z^{-4})$$

$$S_{(z)}\ =\ 1 + z^{-2} + 5z^{-4} + z^{-6} + z^{-8}$$

On retrouve le résultat obtenu dans l'exemple où le même code était simplement biphasé.

101050101, avec un pic principal à 5 et des lobes secondaires à 1.

Ces opérations de corrélation sont faites pour toutes les distances de la portée du radar, c'est-à-dire tous les $C\tau/2$. Cela implique que l'opération de corrélation doit être réalisée tous les $\tau$. Les polynômes correspondants sont donc affectés d'un facteur $z^{-m}$ représentant les différents retards.

Les concepteurs de radars ont été amenés à utiliser la compression d'impulsions pour améliorer la résolution en distance :

Partant d'un radar classique émettant des impulsions d'une durée T représentée figure 2a, la réponse obtenue en sortie d'un filtre adapté est représentée figure 2b.

Sur ces figures on voit qu'à un signal rectangulaire de durée T correspond une fonction d'autocorrélation en dent de scie amenant une incertitude sur la distance de la cible.

En fabriquant un radar à compression d'impulsions émettant des impulsions de largeur $T = N\tau$, on cherche à réaliser la réponse idéale.

Le signal émis et la fonction d'autocorrélation correspondante sont représentés figures 3a et 3b.

Le signal émis comporte un code à cinq moments 11101 (code de l'exemple), la fonction d'autocorrélation est représentée par un pic de largeur $\tau$. L'incertitude sur la distance a été divisée par N.

En réalité, comme cela a été vu plus haut, on approche de cette réponse idéale, aux lobes secondaires près.

Pour chaque distance, après un traitement qui dépend du type de radar, le résultat de la corrélation est comparé à un seuil et tout ce qui est supérieur à ce seuil provoque une détection ; il se peut donc que, dans certaines conditions (écho très fort), le lobe secondaire amène une détection. Cette détection parasite est bien provoquée par l'écho, mais à une distance fausse.

La visualisation des cibles est commandée par la détection : le problème de détection se reporte donc sur la visualisation. Les mesures et les calculs effectués dans le traitement aboutissent à la localisation des cibles, tant en distance qu'en gisement et, dans les radars Doppler, permettent de préciser la vitesse des cibles détectées. Ces informations doivent être visualisées sur un écran, soit un tube cathodique ou, de plus en plus fréquemment, sur un écran numérique.

Les plots, qui figurent les cibles détectées, représentent généralement la largeur de l'impulsion d'émission dans un radar classique et la largeur du moment élémentaire dans un radar à compression d'impulsions.

Ainsi, dans le cas de la compression d'impulsions (CI), les lobes secondaires provoqueront également des plots sur l'écran, à partir d'une certaine puissance de signal réfléchi par la cible ; ce phénomène apparaîtra dès que le rapport signal sur bruit d'un écho sera supérieur à la rejection des lobes secondaires.

Les lobes secondaires s'étalent sur une distance égale à 2N fois la largeur du moment élémentaire, le lobe principal étant situé au milieu. Leur nombre sera donc d'autant plus élevé que le taux de compression sera plus grand.

Nous avons vu précédemment que l'autocorrélation produit inévitablement des lobes secondaires. Leur niveau dépend des codes employés : d'où l'importance du choix des codes.

Pour un code à N moments le lobe principal a toujours la valeur N.

On a cherché à minimiser la valeur des lobes secondaires. La valeur minimum que l'on puisse obtenir est 1. Les codes remplissant la condition d'avoir des lobes secondaires au maximum égal à 1 sont les codes dit de Barker.

L'étude de ces codes a montré qu'il n'en existe que jusqu'à une longueur maximum de 13, et pour cette valeur le niveau des lobes secondaires sera donc : $20 \log 13 = 22$dB.

On peut aussi chercher à augmenter la valeur du pic principal, pour cela il suffit d'augmenter N.

Les séquences pseudo-aléatoires, ou séquences de longueur maximum, offrent un intérêt particulier car elles possèdent une structure similaire aux séquences aléatoires et des fonctions d'autocorrélation intéressantes. Un registre à décalage rebouclé sur lui-même génère d'une manière simple et pratique une séquence pseudo-aléatoire. Après avoir initialisé à 1 les étages d'un registre à décalage, des sorties sont additionnées modulo 2 et le résultat de cette addition constitue l'entrée du registre. Les sorties du registre à décalages constituent des générateurs de séquences de 0 et de 1 qui se répètent. Ces séquences ont une longueur qui dépend des rebouclages. Lorsque les étages sommés sont convenablement choisis, on obtient une séquence dont la longueur maximum, pour un registre à N étages, est : $L = 2^N - 1$.

Les résultats des fonctions d'autocorrélation de ces codes donnent un rapport pic principal sur lobe secondaire de l'ordre de $\sqrt{N}$.

Dans la pratique on arrive avec de tels codes à rejeter les lobes secondaires de 24 dB par rapport au pic principal.

On peut également mettre à la place du code adapté un code de longueur supérieure au code de référence émis. C'est la méthode du code désadapté.

Une méthode d'optimisation de tels codes pour obtenir soit le plus faible niveau possible au niveau du plus élevé des lobes secondaires, soit un niveau moyen des lobes, le plus faible possible, est décrite dans l'article - IEEE 1990 International Radar Conference, 10 mai 1990, pages 249 - 252 J.M. BADEN et al - Cet article précise en outre que la méthode peut être utilisée pour obtenir dans l'intercorrélation des régions pratiquement exemptes de lobes secondaires. La méthode est une méthode itérative de pondération des moments du filtre désadapté.

Ce genre de méthode amène des pertes qu'il convient de calculer dans chaque cas. On peut arriver à des résultats très satisfaisants avec des pertes de l'ordre de 0,2 à 1 dB.

Les méthodes qui viennent d'être explicitées pour diminuer les lobes secondaires présentent toutes des qualités et des défauts propres :

- les codes de Barker (de longueur N) laissent des lobes secondaires de niveaux relativement forts étalés sur 2N moments ;- les codes désadaptés laissent les lobes secondaires faibles, mais étalés sur des distances beaucoup plus grandes.

Les affaiblissements obtenus sont en général suffisants pour des radars de portée importante. Par contre les radars de courte portée ont des dynamiques de signaux très importantes.

Les détections parasites dues aux lobes secondaires surtout sensibles pour les radars de courte portée ont de nombreux inconvénients en particulier lorsque l'on veut équiper le radar de fonctionnalités particulières par exemple, l'acquisition et la poursuite automatique des cibles mobiles. Lorsqu'une cible est détectée, sa position est déterminée et le radar reste pointé sur elle. Il suit ses déplacements aussi bien en distance qu'en gisement et reste "accroché" tant que l'opérateur le désire.

Ce procédé ne peut fonctionner correctement que si la localisation de la cible est précise. La présence de lobes secondaires peut amener des difficultés à poursuivre une cible mobile. De même lorsque l'on doit surveiller un site protégé au moyen d'un radar, il peut y avoir des zones où la présence de cibles mobiles est normale (routes...). Dans ce cas on désire que les détections ne provoquent pas d'alarmes, et l'on doit inhiber ces zones. La surveillance de périmètres est un cas particulier de gestion de zones : le radar réalise la surveillance d'une portion de terrain d'une largeur déterminée (par exemple le pourtour d'un site protégé) et ne doit alarmer que pour des cibles évoluant dans cette zone. Des cibles situées à l'intérieur des zones inhibées peuvent provoquer des détections dans les zones adjacentes par l'intermédiaire de leurs lobes secondaires qui se situent à l'intérieur de la zone active de surveillance et provoquer ainsi des détections parasites.

L'invention a donc pour objet un procédé destiné à atténuer et éventuellement à supprimer l'effet des lobes secondaires.

A cette fin l'invention vise un procédé de traitement d'un signal reçu en provenance directe ou indirecte d'un émetteur, émettant des impulsions codées de façon numérique selon un code d'émission de N moments, traitement comportant notamment un filtrage adapté au signal émis et une détection par comparaison du niveau du signal après filtrage à un seuil dit de détection, caractérisé en ce que l'on fait subir au signal reçu deux traitements A et B, le traitement A comportant une autocorrélation et le traitement B comportant une intercorrélation avec un code désadapté de longueur au moins égale à 3N dont la fonction d'intercorrélation avec le code d'émission donne un lobe principal central et au moins N lobes secondaires nuls de part et d'autre de ce lobe principal et en ce qu'une détection relative à l'un des moments de la corrélation ou de l'intercorrélation n'est décidée que si les niveaux des fonctions d'autocorrélation et d'intercorrélation de ce même moment sont supérieurs au seuil de détection.

On considère que le signal est en provenance directe de l'émetteur lorsqu'on est dans le cas de signaux émis à des fins de communication ceci même lorsque le signal transite entre l'émetteur et le récepteur dans des couloirs par réflexion ou réfraction sur des couches atmosphériques.

On considère que le signal est en provenance indirecte lorsque l'émetteur et le récepteur sont voisins et que le récepteur reçoit le signal émis par l'émetteur après réflexion sur un objet non coopérant, ce qui est le cas des signaux radars. Les moments de la fonction d'autocorrélation et de la fonction d'intercorrélation sont dits les mêmes, s'ils ont le même éloignement de leurs lobes principaux respectifs.

Par rapport à l'article IEEE précité qui expose que le traitement peut comprendre une autocorrélation ou bien une intercorrélation on voit que selon l'invention on ajoute un traitement supplémentaire, l'autocorrélation ou l'intercorrélation et que l'intercorrélation introduite présente des caractéristiques particulières relatives à sa longueur, au moins 3N et au résultat de la fonction d'intercorrélation qui doit donner au moins N lobes secondaires nuls de part et d'autre du lobe pricipal.

En plus du critère de détection à l'issue de chacun des traitements A et B on pourra ne décider qu'il y a détection qu'après soumission des signaux issus des traitements A et B à un critère supplémentaire. Ce critère pourra être par exemple une différence de niveau entre les deux signaux inférieure à un certain seuil.

Le récepteur fonctionnant selon le procédé de l'invention comportera au niveau du filtrage du signal deux voies de traitement du signal reçu, l'une comportant une autocorrélation et l'autre une intercorrélation avec un signal désadapté de longueur au moins égale à 3N, la fonction d'intercorrélation ayant au moins N lobes secondaires nuls de part et d'autre du lobe principal. Les circuits de détection comporteront également deux voies comportant chacune un comparateur du signal au seuil de détection ; un module logique n'émettant un signal correspondant à la détection que si moment à moment il y a détection au niveau des deux comparateurs. Dans le cas de soumission à un critère supplémentaire la chaîne de traitement comportera le module logique ou le circuit à même d'effectuer la comparaison souhaitée.

Les deux voies de traitement au niveau du filtrage et de la détection pourront être matérielles ou temporelles. Elles seront matérielles s'il y a effectivement deux voies parallèles. Elles seront temporelles si les deux traitements A et B sont effectués successivement sur la même voie matérielle en multiplexage .

L'invention sera maintenant explicitée en référence aux figures 4 à 6 dans lesquelles les figures 4 (a, b, c) représentent un signal en sortie de traitement A (4a) en sortie de traitement B (4b) et après détection et assemblage par "et" logique (4c).

La figure 5 représente une partie d'un récepteur suivant l'invention.

La figure 6 représente une partie d'un récepteur radar Doppler suivant l'invention.

Il a été vu que les méthodes d'action classique sur les lobes secondaires par code de Barker ou désadaptés avaient chacune leurs inconvénients.

Il est possible et c'est l'objet de l'invention de concevoir un traitement qui utilise les deux méthodes et ne conserve que leurs propriétés intéressantes. Le principe tient en trois points :

- Emission d'un code à N moments
- Réception : deux voies de traitement :
  - un traitement classique "A" : les N coefficients du corrélateur sont identique à ceux du code émis. Après filtrage, une information de détection appelée $PLOTA_j$ est disponible pour chaque moment j ;

$PLOTA_j =$    O s'il n'y a pas de détection pour le moment

$PLOTA_j =$    1 s'il y a détection.

   Il ne peut y avoir de détection que sur N moments de part et d'autre du pic principal.

- Un traitement pondéré "B" utilisant à la réception un code désadapté de longueur au moins égale à 3N : les coefficients sont calculés de manière à obtenir au moins N zéros (lobes secondaires nuls) de chaque côté du pic principal. Comme pour le traitement "A", après filtrage, les informations de détection appelées $PLOTB_j$ sont disponibles :

$PLOTB_j =$    O s'il n'y a pas de détection

$PLOTB_j =$    1 s'il y a détection.

Des détections ne sont possibles que sur le pic principal et dans les deux zones situées N moments avant ou après ce pic.

- Les plots résultants $PLOT_j$ sont obtenus en faisant le "et" logique des informations de détection $PLOTA_j$ et $PLOTB_j$ qui résultent des deux traitement A et B.

$$PLOT_J = PLOTA_J \text{ "et" } PLOTBJ$$

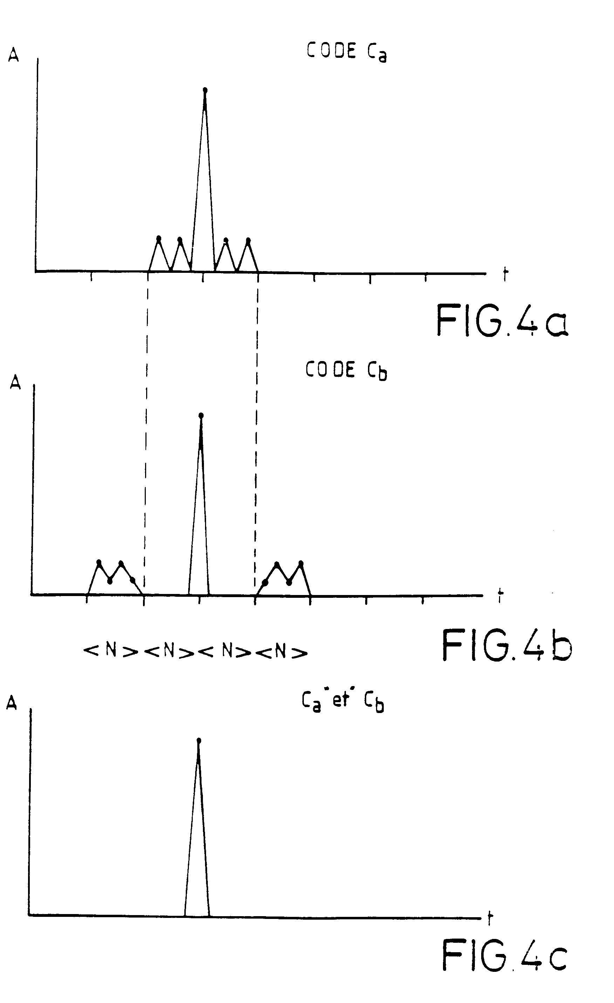

L'amplitude du signal pour chacun des moments en sortie de corrélation, d'intercorrélation et après "et" logique est représentée figure 4 (a, b, c) respectivement.

On voit que du fait des propriétés des codes choisis il ne peut y avoir détection que sur le lobe principal.

On note que dans le cas d'un radar les moments qui représentent physiquement des incréments successifs d'horloge correspondent à des portes distance, par contre en communication ils correspondent à des décalages temporels d'écoute du signal à recevoir.

Dans le cas d'un radar Doppler une transformée de Fourrier rapide (FFT) dans chacune des voies de traitement A et B permettra pour chaque porte de vitesse i et de distance j de déterminer des informations de détection $PLOTAi_j$ et $PLOTBi_j$ que le "et" logique transformera en information de détection $PLOT_{ij}$.

Le mode de calcul du code désadapté sera maintenant explicitée de façon détaillée.

L'impulsion émise est une impulsion composée de N moments modulés en phase au rythme d'un code binaire. Le code d'émission est choisi pour avoir la meilleure rejection possible des lobes secondaires ; pour une longueur N inférieure à 13, un code de Barker est le meilleur choix.

Un traitement classique A mettant en oeuvre à la réception un code adapté est utilisé. Les coefficients du corrélateur sont donc tous identiques au signe près. Les résultats obtenus sont ceux qui ont été décrits plus haut, une rejection maximale des lobes secondaires de 22 dB pour le code de Barker à 13 moments. Ces lobes secondaires sont situés à N moments de part et d'autre du pic principal.

La longueur minimum du code désadapté $CD(z)$ utilisé pour le traitement B et nécessaire pour avoir N lobes secondaires nuls de chaque côté du pic principal est 3N. Ce code est obtenu en deux étapes :

- calcul du code désadapté
- calcul complémentaire sur les coefficients pour obtenir zéro sur chacun des N lobes qui entourent le pic principal.

Le but du code désadapté CD(z) est d'obtenir une fonction de corrélation idéale avec des lobes secondaires nuls :

$$S(z) = N.z - m$$

Il suffit donc de trouver le code CD(z) tel que :

$$S(z) = C(z).CD(z) = N.z^{-m}$$

D'où il vient :

$$CD(z) = N.z^{-m}.1/C(z)$$

CD(z) correspond au filtre inverse $1/C(z)$ retardé de $z^{-m}$ et amplifié par le facteur N. De plus, comme pour le code adapté, il faut retourner dans le temps C(z) pour avoir les coefficients dans le bon sens.

Si $z_i$ (i = 1 à N-1) sont les N-1 racines complexes du polynôme C(z), CD(z), au retard $z^{-m}$ près, peut s'écrire sous la forme :

$$CD(z) = 1/(z^{-1} - a_1).(z^{-1} - a_2)...(z^{-1} - a_{n-1})$$

Les racines de C(z) peuvent être séparées en 2 groupes, l'un, $C_1(z)$, pour les racines situées à l'intérieur du cercle unité, l'autre, $C_2(z)$, pour celles dont les modules sont supérieurs à 1.

$$CD(z) = 1/C_1(z). 1/C_2(z)$$

- Pour $C_1(z)$, on peut trouver une approximation de $1/(z^{-1}-a)$ par division polynomiale vers la droite :

$$1/(z^{-1} - a) = (a^{-1} + z^{-1}.a^{-2} + z^{-2}.a^{-3} + ...z^{-i}.a^{-a(i+1)})$$

Cette suite est convergente si le module de a est inférieur à 1. On peut donc l'appliquer au premier groupe de racines de C(z). Nous obtenons alors des polynômes qui constitueront une approximation d'autant plus précise que i est plus grand.

- Pour les racines de module supérieur à 1, cette suite est divergente ; pour la rendre convergente, on procède à un changement de variable : $y=1/z^{-1} = z^{-1}=1/y$

$$1/(z^{-1} - a) = -y/a.(1/y - a^{-1}).$$

Le deuxième terme peut alors être décomposé en une suite convergente car le module de $a^{-1}$ est inférieur à 1. En remplaçant y par sa valeur z, on aboutit à l'approximation :

$$1/(z^{-1} - a) = z + az^2 + a^2z^3 + ... + a^iz^{i+1}$$

Cette méthode revient à faire une division vers la gauche. Nous avons alors déterminé les autres polynômes qui correspondent aux racines de module supérieur à 1.

- Le produit de ces N-1 polynômes, en limitant le nombre de termes à la longueur désirée, donnera l'équation du code désadapté cherché. Plus ce polynôme, qui est une approximation, aura de termes, meilleurs seront les résultats obtenus.

Les coefficients du code désadapté sont le résultat de plusieurs approximations et le résultat final dépend de la précision des calculs. De plus, les coefficients trouvés doivent être codés sur un nombre de bits fixés par le corrélateur choisi.

Le résultat de l'intercorrélation d'un code par un code désadapté donne des lobes secondaires faibles, mais non nuls. Pour les annuler, il faut reprendre les calculs pour chaque moment du code, en partant du pic principal : on conserve les N coefficients du centre, qui correspondent au pic principal, puis, après un décalage, on calcule la valeur du coefficient suivant pour obtenir un résultat de corrélation nul, et ainsi de suite pendant N décalages pour obtenir les N coefficients suivants. Les N coefficients précédant le pic principal peuvent se déduire de ces derniers car ils ont le même module et le même signe que les coefficients correspondant du code désadapté.

Le code ainsi obtenu est constitué de au moins 3N coefficients.

Un exemple de calcul de pondération de coefficients est donné ci-après pour le code de l'exemple soit 11101.

Supposons que ce code soit pris pour coder l'impulsion émise et donc pour effectuer l'autocorrélation suivant le traitement A.

Les coefficients CD du code désadaptés codés sur 8 bits sont en valeur décimale.

| $C_0$ | $C_1$ | $C_2$ | $C_3$ | $C_4$ | $C_5$ | $C_6$ | $C_7$ |
|---|---|---|---|---|---|---|---|
| -3 | -11 | 29 | -31 | -5 | 74 | -127 | 79 |

| $C_8$ | $C_9$ | $C_{10}$ | $C_{11}$ | $C_{12}$ | $C_{13}$ | $C_{14}$ |
|---|---|---|---|---|---|---|
| 127 | 74 | 5 | -31 | -29 | -11 | 3 |

Les coefficients CB, qui amènent cinq zéros de part et d'autre du pic principal, se déduisent de CD à partir des cinq coefficients centraux. En considérant un signal d'entrée normalisé à une amplitude unité, le calcul du corrélateur pour un décalage correspond à :

| coeff | $C_5$ | $C_6$ | $C_7$ | $C_8$ | $C_9$ | $C_{10}$ |
|---|---|---|---|---|---|---|
| | 74 | -127 | 79 | 127 | 74 | x |
| signal | 0 | 1 | -1 | 1 | 1 | 1 |

le signal de sortie du corrélateur est :
$$S(1) = C_6 - C_7 + C_8 + C_9 + C_{10} = O$$
$$C_{10} = - C_6 + C_7 - C_8 - C_9 = 127 + 79 - 127 - 74 = 5$$

Il se trouve que dans ce cas le coefficient corrigé par ce calcul est égal au coefficient initialement trouvé pour le code désadapté CD, il n'en va pas de même dans tous les cas.

En faisant le même calcul pour 2, 3, 4 et 5 décalages les coefficients suivants sont déterminés.

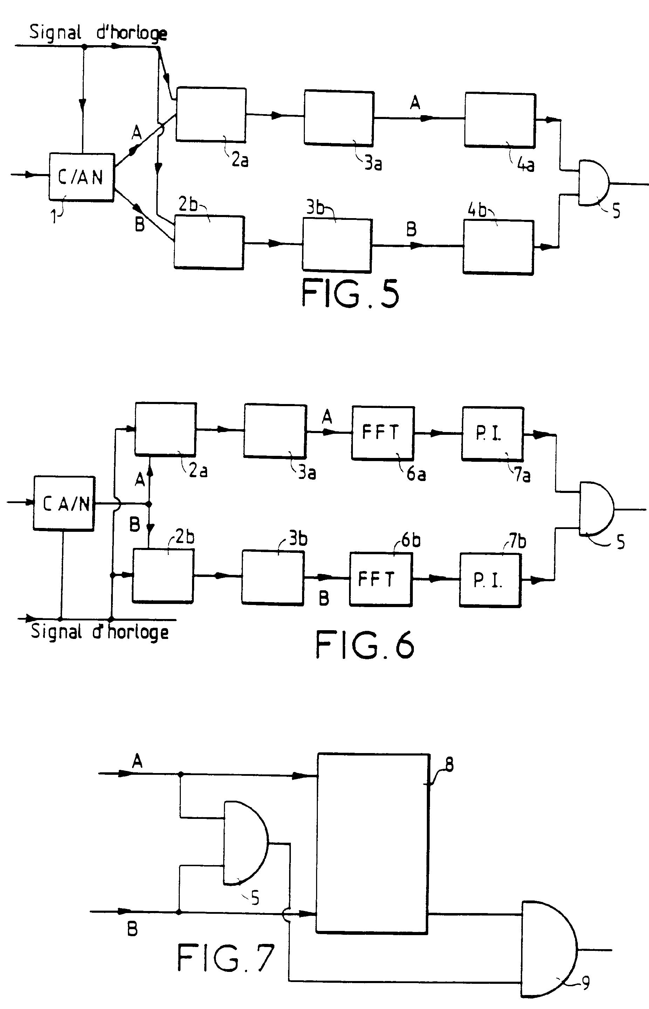

Une partie d'un récepteur radar fonctionnant suivant l'invention est représentée figure 5.

Cette partie comporte un convertisseur analogique, numérique 1.

Le signal en sortie du convertisseur est partagé ensuite selon deux voies une voie A et une voie B. Ces deux voies comportent chacune un corrélateur 2a 2b, éventuellement un filtre 3a 3b, et une détection 4a 4b, ces deux voies se rejoignent au niveau d'un "et" logique matérialisé figure 5 par une porte 5.

Le mode particulier de réalisation du radar selon l'invention concerne un radar Doppler à compression d'impulsion numérique et dans ce cas chacune des voies de traitement comporte outre un corrélateur et un filtre un module de FFT 6a 6b une post-intégration 7a 7b.

Ce mode de réalisation est représenté schématiquement figure 6.

La figure 7 représente la fin des voies de traitement A et B telle que représentés figure 5 ou 6. On a représenté sur cette figure un module 8 permettant d'introduire un critère supplémentaire. Dans le cas représenté figure 7, ce module est un comparateur de niveau. Les signaux issus de chacune des voies de traitement A et B sont donc introduits d'une part dans la porte "et" 5 et d'autre part dans le module 8. Les signaux en sortie de la porte "et" 5 et du module 8 sont à leur tour introduit dans une porte "et" 9. La détection n'est prononcée que si le signal en sortie de porte 9 est positif.

Ces modules ont été représentés physiquement figure 7, mais il est évident qu'ils peuvent être intégrés à l'intérieur de modules logiques sous forme de fonction.

Comme il a déjà été signalé plus haut le procédé de traitement de signal selon l'invention peut être étendu aux récepteurs de communication, en utilisant par exemple le dispositif de la figure 5.

L'exemple de réalisation comporte un code désadapté de longueur 3N mais il est évident que cette longueur est la longueur mimimum pour obtenir, une fonction d'intercorrélation avec le code émis comportant N lobes secondaires nuls de part et d'autres du lobe principal. On pourra donc prendre des lobes désadaptés de longueur supérieure à 3N.

On est toutefois limité dans la longueur principalement par les composants existants effectivement sur le marché en particulier les processeurs spécialisés utilisés pour les registres à décalage et accessoirement par l'augmentation du temps de traitement.

## Revendications

1. Procédé de traitement d'un signal reçu en provenance directe ou indirecte d'un émetteur, émettant des impulsions codées de façon numérique selon un code d'émission de N moments , traitement comportant un filtrage adapté au signal émis et une détection par comparaison du niveau du signal après filtrage à un seuil dit de détection, caractérisé en ce que l'on fait subir au signal reçu deux traitements A et B, le traitement A comportant une autocorrélation et le traitement B comportant une intercorrélation avec un code désadapté de longueur au moins égale à 3N dont la fonction d'intercorrélation avec le code d'émission donne un lobe principal central et au moins N lobes secondaires nuls de part et d'autre de ce lobe principal et en ce qu'une détection relative à l'un des moments de la corrélation ou de l'intercorrélation n'est décidée que si les niveaux des fonctions d'autocorrélation et d'intercorrélation de ce même moment sont supérieurs au seuil de détection .

2. Procédé suivant la revendication 1 dans lequel la détection n'est décidé qu'après soumission des signaux issus des traitements A et B à un critère supplémentaire.

3. Procédé selon la revendication 2, dans lequel le critère supplémentaire est un écart de niveaux entre les deux signaux, inférieur à un seuil fixé.

**4.** Récepteur de signal pour la réception d'un signal en provenance d'un émetteur, émettant des impulsions codées de façon numérique selon un code d'émission de N moments, caractérisé en ce qu'il comporte deux voies A et une voie B, chacune des voies recevant le signal et comportant en série au moins un corrélateur (2a, 2b) et un détecteur (4a, 4b), les deux voies se rejoignant au niveau d'un "et" logique (5), le corrélateur (2a) de la voie A effectuant une autocorrélation, le corrélateur 2b de la voie B effectuant une intercorrélation avec un code ayant une longeur au moins égale à 3 N dont la fonction d'interconnélation avec le code signal donne un lobe principale central et au moins N lobes secondaires nuls de part et d'autre de ce lobe principal.

**5.** Récepteur selon la revendication 4, caractérisé en ce que le signal alimentant les voies A et B est issu d'un convertisseur analogique numérique (1).

**6.** Récepteur de radar Doppler selon la revendication 5, caractérisé en ce que chacune des voies A et B comporte en outre un module de transformation de Fourier rapide FFT (6a 6b), et un module de post intégration (7a 7b).

**7.** Récepteur radar selon l'une des revendications 4 à 6 caractérisé en ce que le signal issus de chacune des voies de traitement A et B est en outre introduit dans un module de comparaison (8), les signaux en sortie du module (8) et de la porte "et" (5) étant introduit dans une autre porte "et" (9).

## Patentansprüche

**1.** Verfahren zur Verarbeitung eines direkt oder indirekt von einem Sender kommenden Signals, der digital kodierte Impulse gemäß einem Sendekode mit N Momenten aussendet, wobei die Verarbeitung eine an das ausgesendete Signal angepaßte Filterung und eine Erfassung durch Vergleich des Signalpegels nach dem Filtern mit einer sogenannten Erfassungsschwelle aufweist, dadurch gekennzeichnet, daß man das Empfangssignal zwei Verarbeitungen A und B unterwirft, von denen die Verarbeitung A eine Autokorrelation und die Verarbeitung B eine Interkorrelation mit einem unangepaßten Kode einer Mindestlänge 3N ist, deren Interkorrelationsfunktion mit dem gesendeten Kode eine zentrale Hauptkeule und mindestens N Nebenkeulen des Werts Null zu beiden Seiten der Hauptkeule ergibt, und daß eine Erfassung bezüglich eines der Momente der Autokorrelation oder der Interkorrelation erst dann bestätigt wird, wenn die Pegel der Autokorrelations- und Interkorrelationsfunktionen dieses gleichen Moments eine Erfassungsschwelle überschreiten.

**2.** Verfahren nach Anspruch 1, bei dem die Erfassung erst dann bestätigt wird, wenn die aus der Verarbeitung A und der Verarbeitung B kommenden Signale einem zusätzlichen Kriterium unterworfen wurden.

**3.** Verfahren nach Anspruch 2, dadurch gekennzeichnet, daß das zusätzliche Kriterium im unter einer festgelegten Grenze bleibenden Abstand der Pegel zwischen den beiden Signalen liegt.

**4.** Signalempfänger für den Empfang eines Signals von einem Sender, welcher digital kodierte Impulse gemäß einem Sendekode mit N Momenten aussendet, dadurch gekennzeichnet, daß er zwei Kanäle A und B aufweist, die je das Signal empfangen und in Reihe mindestens einen Korrelator (2a, 2b) und einen Detektor (4a, 4b) besitzen, wobei die beiden Kanäle in einem logischen UND-Glied (5) zusammenlaufen und der Korrelator (2a) des Kanals A eine Autokorrelation sowie der Korrelator (2b) des Kanals B eine Interkorrelation mit einem solchen Kode einer Mindestlänge von 3N durchführt, daß die Interkorrelationsfunktion mit dem Signalkode eine mittlere Hauptkeule und mindestens N Nebenkeulen des Werts Null zu beiden Seiten dieser Hauptkeule ergibt.

**5.** Empfänger nach Anspruch 4, dadurch gekennzeichnet, daß das in die Kanäle A und B eingespeiste Signal aus einem Analog-Digital-Wandler (1) stammt.

**6.** Empfänger eines Doppler-Radarsystems nach Anspruch 5, dadurch gekennzeichnet, daß jeder Kanal A und B außerdem einen schnellen Fourier-Transformationsmodul (6a, 6b) und einen Nachintegrationsmodul (7a, 7b) enthält.

**7.** Radarempfänger nach einem der Ansprüche 4 bis 6, dadurch gekennzeichnet, daß die aus den beiden Verarbeitungskanälen A und B kommenden Signale außerdem in einen Komparatormodul (8) eingegeben werden, dessen Ausgangssignal zusammen mit dem des UND-Tors (5) an ein weiteres UND-Tor (9) angelegt werden.

## Claims

1. Method for the processing of a signal received directly or indirectly from a transmitter, transmitting pulses that are digitally encoded according to a transmission code of N moments: processing comprising a filtering that is matched to the transmitted signal and an operation of detection by comparison of the post-filtering level of the signal with a so-called detection threshold; characterized in that the signal received is subjected to two processing operations A and B, the processing operation A comprising an autocorrelation and the processing operation B including a cross-correlation with a mismatched code having a length at least equal to 3N, the cross-correlation function of this mismatched code with the transmission code giving a major central lobe and at least N sidelobes that are zero on either side of this major lobe; and in that it is decided that there is a detection relating to one of the moments of the correlation or of the cross-correlation only if the levels of the functions of autocorrelation and cross-correlation of this very same moment are higher than the detection threshold.

2. Method according to Claim 1, in which it is decided that there is a detection only after the signals arising from the processing operations A and B have been subjected to an additional criterion.

3. Method according to Claim 2, in which the additional criterion is a gap in levels between the two signals which is less than a fixed threshold.

4. Signal receiver for the reception of a signal coming from a transmitter, transmitting pulses that are digitally encoded according to a transmission code of N moments, characterized in that it includes two channels A and one channel B, each of the channels receiving the signal and including in series at least one correlator (2a, 2b) and one detector (4a, 4b), the two channels joining up in the region of a logic "and" (5), the correlator (2a) of the A channel performing an autocorrelation, the correlator 2b of the B channel performing a cross-correlation with a code having a length at least equal to 3 N whose cross-correlation function with the signal code gives a major central lobe and at least N sidelobes that are zero on either side of this major lobe.

5. Receiver according to Claim 4, characterized in that the signal feeding the A and B channels arises from an analogue digital converter (1).

6. Doppler radar receiver according to Claim 5, characterized in that each of the A and B channels further comprises a fast Fourier transformation FFT module (6a 6b), and a post-integration module (7a 7b).

7. Radar receiver according to any one of Claims 4 to 6, characterized in that the signal arising from each of the A and B processing channel is further introduced into a comparison module (8), the signals output by the module (8) and by the "and" gate (5) being introduced into another "and" gate (9).

FIG. 1

FIG.2a

FIG.2b

FIG.3a

FIG. 3b

CODE C$_a$

A

FIG.4a

CODE C$_b$

A

FIG.4b

<N><N><N><N>

C$_a$ et C$_b$

A

FIG.4c

Signal d'horloge

C / AN

FIG.5

C A/N

FFT

P.I.

FFT

P.I.

Signal d'horloge

FIG.6

A

B

FIG.7